# FASCICULE DE BREVET EUROPEEN

(11) **EP 1 556 619 B1**
(45) Date de publication et mention de la délivrance du brevet: **01.03.2006**
(21) Numéro de dépôt: 03778478.2
(22) Date de dépôt: 28.10.2003
(51) Int. Cl.: F15B 21/04, F16H 61/40, F16H 61/46

(54) **DISPOSITIF D ECHANGE ET/OU DE BALAYAGE POUR UN CIRCUIT COMPR ENANT AU MOINS UN MOTEUR HYDRAULIQUE**
SPÜLVORRICHTUNG FÜR EINEN KREISLAUF MIT MINDESTENS EINEM HYDRAULISCHEN MOTOR
EXCHANGE AND/OR SCAVENGING DEVICE FOR A CIRCUIT COMPRISING AT LEAST ONE HYDRAULIC MOTOR

(30) Priorité: 28.10.2002 FR 0213438
(43) Date de publication de la demande: 27.07.2005
(60) Demande divisionnaire: 05077744.0
(73) Titulaire: POCLAIN HYDRAULICS INDUSTRIE, 60411 Verberie (FR)
(72) Inventeur: MANGANO, Alain, F-60350 Vieux Moulin (FR); RAISIN, Jean-Philippe, F-60270 Gouvieux (FR)
(74) Mandataire: Intes, Didier Gérard André
(86) Numéro de dépôt international: PCT/FR2003/003199
(87) Numéro de publication internationale: WO 2004/040147

(56) Documents cités:
- DE-A- 19 651 988
- US-A- 4 354 351
- US-B1- 6 336 325
- US-B1- 6 339 928

## Description

La présente invention concerne circuit comprenant un dispositif d'échange et/ou de balayage et au moins un moteur hydraulique ayant un carter qui définit un espace intérieur dans lequel est disposé le blot-cylindres du moteur, et deux conduites principales, qui sont reliées à une pompe principale et qui constituent respectivement une conduite principale d'alimentation et une conduite principale d'échappement pour ledit moteur hydraulique, le dispositif d'échange comprenant une valve d'échange reliée à l'une au moins des conduites principales et apte à adopter une configuration ouverte dans laquelle elle établit une liaison entre ladite conduite principale à laquelle elle est reliée et un réservoir sans pression, et une configuration fermée dans laquelle elle empêche cette liaison.

Un tel dispositif d'échange a pour fonction de prélever du fluide sur le drcuit principal, afin de permettre le refroidissement du fluide avant son évacuation vers un réservoir sans pression et sa réinjection dans le circuit. Avec un dispositif de balayage le fluide prélevé passe par le carter du moteur et/ou de la pompe principale avant d'être évacué vers le réservoir sans pression et remis en drculation, en général par une pompe auxiliaire.

Des dispositifs d'échange connus comportent un sélecteur qui permet de mettre en communication la conduite principale qui est à la plus basse pression avec une soupape qui n'autorise l'évacuation du fluide qu'à partir d'un seuil de pression. Dans certains dispositifs, le débit de fluide prélevé peut être limité.

Par exemple, le document DE-195 22 448 montre un dispositif d'échange comportant un sélecteur d'échange et une soupape disposés l'un à la suite de l'autre sur le circuit d'échange.

Le document US 6,339,928 divulgue un dispositif d'échange pour un circuit fermé comprenant un sélecteur du type précité et une valve d'échange qui est commandée pour autoriser ou non l'évacuation du fluide dans certaines conditions de fonctionnement. Pour cela, cette valve d'échange est commandée en fonction de paramètres de fonctionnement tels que la vitesse du véhicule entraîné par le moteur hydraulique, la vitesse de rotation d'un moteur à combustion qui entraîne la pompe principale et la température du fluide dans cette pompe.

La valve d'échange du dispositif de US 6,339,928 est entièrement commandée électriquement, par un processeur qui, à partir de paramètres représentatifs d'un état du circuit, détermine un ordre de commande.

Dans un grand nombre de cas, il reste intéressant de prendre en compte la pression dans la conduite principale à laquelle est reliée la valve d'échange, pour permettre ou non un échange. C'est par exemple le cas lorsque le débit de fluide délivré par la source de fluide à laquelle est relié l'échange devient faible, car le débit d'échange risque alors d'entraîner dans la conduite principale à laquelle est reliée la valve d'échange une chute de pression telle que le gavage du moteur peut ne pas être assuré.

Le dispositif de US 6,339,928 ne peut prendre cette pression en compte que si des capteurs de pressions sont disposés dans les deux conduites principales ou à la sortie d'un sélecteur raccordé à ces conduites, de telle sorte que les pressions mesurées par ces capteurs soient utilisées par le processeur lors de la détermination de sa commande.

Ainsi, un certain nombre de composants électroniques sont nécessaires, ce qui augmente le prix de revient du dispositif. De plus, la commande entièrement électrique ne s'avère pas toujours la mieux adaptée lorsque, comme c'est le cas en l'espèce, cette commande s'applique à des composants hydrauliques dont l'ouverture ou la fermeture modifie l'état hydraulique du circuit.

La présente invention vise à remédier aux inconvénients de l'état de la technique précité en permettant la prise en compte, pour l'échange, de la pression dans la conduite à laquelle est reliée la valve d'échange par une commande hydraulique, en plus d'un paramètre autre que cette pression.

Ce but est atteint grâce au fait que, dans le circuit de l'invention, la valve d'échange comporte un organe mobile entre une première et une deuxième position correspondant respectivement à la configuration fermée et à la configuration ouverte de la valve d'échange, au fait que le dispositif comprend une valve de commande qui est commandée en fonction dudit au moins un paramètre de commande pour autoriser le déplacement dudit organe mobile, au fait qu'il comporte une chambre de commande d'ouverture apte à être reliée à l'une des conduites principales par une première conduite de liaison pour solliciter l'organe mobile vers sa deuxième position dans laquelle ladite conduite principale est reliée au réservoir sans pression et une chambre de commande de fermeture apte à être reliée à une enceinte sous pression pour solliciter l'organe mobile vers sa première position et au fait que la valve de commande est commandée en fonction dudit au moins un paramètre de commande pour relier ladite chambre de commande de fermeture au réservoir sans pression ou pour isoler cette chambre de ce réservoir.

Avec l'invention, c'est la valve de commande qui est commandée par le paramètre autre que la pression dans la conduite à laquelle est reliée la valve d'échange, tandis que, par la disposition judicieuse des chambres de commande d'ouverture et de fermeture de cette valve d'échange, cette dernière est commandée par la pression dans la conduite principale à laquelle elle est reliée.

L'échange peut ne pas être souhaité dans certaines conditions particulières, par exemple au démarrage du moteur hydraulique.

En effet, en prélevant un débit de fluide pour l'échange, on risque de priver le circuit d'une quantité de fluide nécessaire au pilotage d'autres fonctions auxiliaires, telles que le déblocage du frein de stationnement. Ainsi, le prélèvement d'un débit d'échange peut faire chuter la pression et empêcher le pilotage d'une autre fonction.

En outre, lorsque le dispositif comporte un sélecteur d'échange à tiroir, il peut arriver, lorsque le fluide est froid et présente une viscosité élevée, que ce tiroir ait un déplacement trop lent pour permettre la mise en communication de la conduite principale qui est à la plus basse pression avec la soupape d'échange. En effet, si la pression dans les conduites s'inverse, le tiroir peut rester momentanément dans la position qu'il avait avant cette inversion et donc mettre la conduite principale qui était précédemment à la basse pression et qui se trouve alors à la haute pression, en communication avec la valve d'échange, privant ainsi le moteur d'une partie de sa puissance.

Lorsque la valeur dudit au moins un paramètre de commande témoigne du fait que l'échange n'est pas souhaité, la valve de commande est commandée pour isoler du réservoir la chambre de commande de fermeture. Du fait de cet isolement, la pression dans la chambre de commande de fermeture peut être telle que la pression dans la chambre de commande d'ouverture, reliée à l'une des conduites principales, ne soit pas suffisante pour commander l'ouverture de la valve d'échange.

Ceci permet d'éviter de prélever du fluide dans la conduite principale par le dispositif d'échange dans des conditions défavorables, reflétées par ce paramètre de commande. Comme on le verra dans la suite, ces conditions défavorables peuvent être un démarrage à froid du moteur ou bien des phases de fonctionnement particulières, telles qu'une accélération, une décélération, une manoeuvre requérant toute la puissance du moteur, etc. Dans toute la suite, ce paramètre autre que la pression de fluide dans la conduite principale est dénommé premier paramètre de commande. Il convient de relever que, dans ces conditions défavorables dans lesquelles l'échange n'est pas souhaité, la pression dans la chambre de fermeture de la valve d'échange est telle qu'elle empêche les fuites entre l'entrée de la valve d'échange et le réservoir.

En revanche, lorsque ces conditions défavorables ne sont plus constatées, c'est-à-dire lorsque l'état du circuit permet théoriquement l'échange, la valve de commande relie la chambre de commande de fermeture au réservoir et la valve d'échange réalise l'échange lorsque la pression dans la conduite principale à laquelle elle est reliée le permet.

Avantageusement, le premier paramètre de commande représentant un état du circuit est choisi parmi la pression du fluide dans une conduite auxiliaire du circuit (par exemple la pression de gavage), la température du fluide dans une région du circuit, la vitesse du rotor du moteur, l'accélération ou la décélération dudit rotor, et la cylindrée active du moteur.

Il peut s'agir aussi de l'angle de braquage d'un véhicule entraîné par le moteur hydraulique, de l'utilisation du débit d'une pompe auxiliaire pour la commande d'une servitude, du sens de marche, d'une situation de freinage, etc ...

Le premier paramètre de commande peut être de tout type, dès lors que sa valeur est représentative d'un état du circuit qui permet de conditionner l'actionnement du dispositif d'échange.

Avantageusement, le dispositif comporte un actionneur apte à commander la valve de commande en fonction d'un seuil du premier paramètre de commande.

Par exemple, lorsque le premier paramètre de commande atteint le seuil, l'actionneur autorise la valve de commande à relier la chambre de commande de fermeture au réservoir sans pression, permettant alors la réalisation de l'échange par la valve d'échange commandée hydrauliquement par la pression dans la conduite principale à laquelle elle est reliée. Avantageusement, le dispositif comporte un sélecteur d'échange apte à mettre la conduite principale qui est à la plus basse pression en communication avec la valve d'échange.

Ce sélecteur permet donc de manière connue, de relier la valve d'échange à la conduite qui est à la plus basse pression. L'invention s'applique toutefois également à un dispositif d'échange dépourvu d'un tel sélecteur, en particulier, du type décrit dans la demande de brevet français n° 2 819 023.

La valve d'échange peut être un sélecteur non progressif à deux positions, auquel cas le débit de fluide prélevé dans sa position ouverte est limité par une restriction. Toutefois, avantageusement, il s'agit d'une valve progressive telle qu'une soupape ou limiteur de pression qui permet de réguler la pression dans la conduite à laquelle elle est reliée quel que soit le débit

Selon un mode de réalisation avantageux, la valve d'échange comprend un corps de valve ayant une entrée raccordée à l'une des conduites principales et une sortie apte à être reliée au réservoir sans pression et un organe mobile entre une première et une deuxième position correspondant respectivement à la configuration fermée et à la configuration ouverte de cette valve d'échange, ledit organe mobile isolant l'entrée de la sortie dans sa première position et reliant ces dernières dans sa deuxième position.

Avantageusement, la chambre de commande de fermeture est associée à des moyens de rappel élastique d'échange sollicitant en permanence l'organe mobile vers sa première position.

Avantageusement, la chambre de commande d'ouverture est située à une extrémité de l'organe mobile qui est voisine de l'entrée du corps de valve, tandis que la chambre de commande de fermeture est située à l'autre extrémité de cet organe mobile et communique avec la chambre de commande d'ouverture par un perçage de l'organe mobile.

Le corps de valve est avantageusement disposé dans un alésage du carter.

Ainsi, la valve d'échange est avantageusement intégrée dans une cartouche qui est directement fixée sur le carter du moteur, permettant à partir d'une structure de moteur standard de choisir le mode d'échange et de balayage le mieux adapté, en modifiant seulement cette cartouche.

En outre, lorsque la valve de commande est disposée au moins en partie dans le corps de valve de la valve d'échange, le premier paramètre de commande peut être directement lié à un état du moteur, tel que sa température, la température du fluide qui le traverse, sa cylindrée, etc.

Ainsi, pour adapter le circuit au type de commande envisagé, il suffit de choisir un ensemble valve d'échange/valve de commande (intégré dans un même composant hydraulique, formant la cartouche précitée) et de l'insérer sur le carter du moteur retenu. La gamme des moteurs proposée est donc largement étoffée à partir d'un nombre restreint de types de moteurs et de dispositifs d'échange.

Avantageusement, la sortie de la valve d'échange est raccordée au réservoir sans pression par l'intermédiaire de l'espace intérieur du carter du moteur.

Dans cette configuration, le fluide prélevé pour l'échange est utilisé pour effectuer un balayage de l'espace intérieur du moteur. En effet, le fluide prélevé par la valve d'échange est injecté dans le carter, tandis que le fluide présent dans le carter est évacué par l'orifice de retour de fuites habituel.

Avantageusement, la valve de commande est une valve progressive.

Le débit de fluide prélevé pour effectuer l'échange peut ainsi varier en fonction de la situation du circuit, en particulier en fonction de la variation du premier paramètre de commande.

L'invention sera bien comprise et ses avantages apparaîtront mieux à la lecture de la description détaillée qui suit, de modes de réalisation représentés à titre d'exemples non limitatifs.

La description se réfère aux dessins annexés sur lesquels :
- la figure 1 montre schématiquement un circuit d'entraînement d'un moteur hydraulique comprenant un dispositif d'échange, selon l'invention ;
- la figure 2A est une vue en coupe longitudinale d'un ensemble valve d'échange/valve de commande selon un mode de réalisation avantageux de l'invention, dans une position ne permettant pas l'échange ;
- la figure 2B est une vue en coupe analogue à celle de la figure 2A, montrant l'ensemble valve d'échange/valve de commande dans une position d'échange ; et
- la figure 3 est une coupe analogue à celle de la figure 2A, pour une variante.

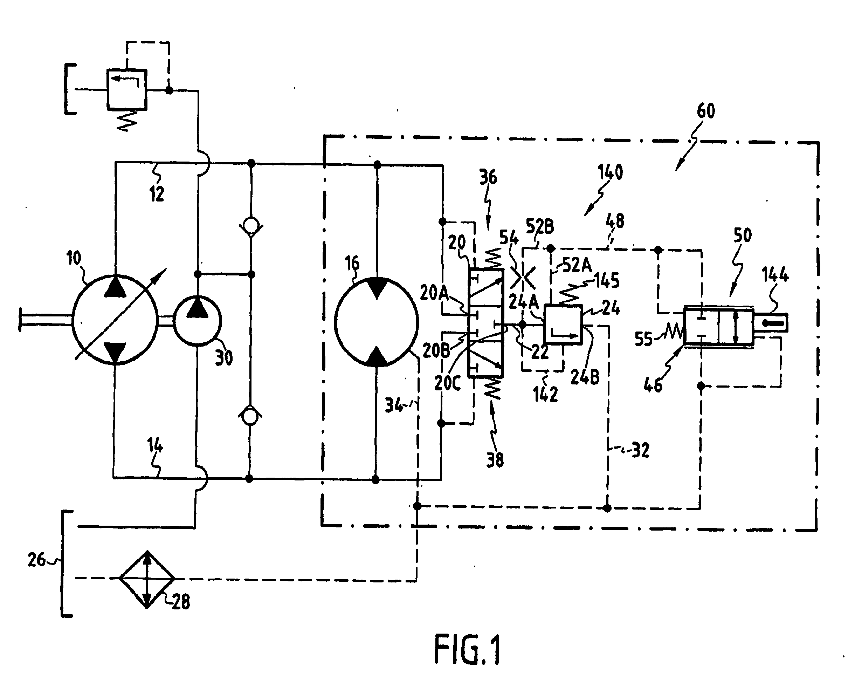

La figure 1 montre un circuit fermé dont la pompe principale 10 a ses orifices respectivement reliés à deux conduites principales, respectivement 12 et 14 qui servent respectivement de conduite d'alimentation et de conduite d'échappement pour un moteur hydraulique 16 auquel elles sont reliées.

Ce circuit comporte en outre un dispositif d'échange qui comprend un sélecteur d'échange 20 qui a deux voies d'entrée 20A et 20B respectivement reliées à chacune des deux conduites principales 12 et 14 et une voie de sortie 20C qui, par une conduite 22 évacue le fluide prélevé par le sélecteur 20 vers l'entrée 24A d'une valve d'échange 24 apte, lorsque son entrée est reliée à sa sortie 24B,à relier la sortie 20C du sélecteur 20 à un réservoir sans pression 26 par l'intermédiaire d'un refroidisseur 28. Ainsi, dans des conditions de fonctionnement données, le fluide prélevé par le sélecteur 20 est refroidi avant d'être réinjecté dans le circuit principal par une pompe de gavage 30. Le réservoir est dit "sans pression" car il est à la pression atmosphérique ou à une faible pression, au plus égale à la pression de gavage.

La sortie 24B de la valve d'échange 24 peut être directement reliée au réservoir sans pression 26 par une conduite de sortie 32 pour servir seulement à l'échange, ou bien être reliée à ce réservoir 26 par l'intermédiaire de l'espace intérieur du moteur 16, pour servir également au balayage dudit espace intérieur, comme illustré sur la figure 1, avant d'être évacué vers le réservoir par le conduit de retour de fuites du moteur 34. Dans ce dernier cas, on parle de dispositif de balayage. Hormis les différences précitées, les deux types de dispositifs fonctionnant de la même manière, on ne s'intéresse pour toute la suite qu'à la seule description d'un dispositif d'échange. Le moteur 16 n'est pas représenté en détails, mais il s'agit par exemple d'un moteur à pistons radiaux du même type que celui décrit dans FR-A-2 673 684.

Le sélecteur d'échange 20 est commandé par des moyens de commande 36 et 38 à partir de sa position neutre représentée sur la figure 1, dans laquelle aucune communication n'est établie entre les conduites principales 12 et 14 et la conduite 22, vers l'une ou l'autre de ses deux positions d'échange dans lesquelles il raccorde la conduite principale 12 ou 14 qui est à la plus basse pression à la conduite 22.

La valve d'échange 24 est commandée par l"intermédiaire d'une valve de commande 46 qui, comme illustré sur la figure 1, est disposée entre une conduite de liaison 48 et le retour de fuites 34 du moteur.

La valve d'échange 24 comporte, un organe mobile entre une première et une deuxième position, correspondant respectivement à la configuration fermée et ouverte de cette valve. La valve d'échange 24 est une soupape ou un limiteur de pression dont l'organe mobile est le clapet ou le tiroir. Ci-après, cet organe mobile sera dénommé tiroir.

Les moyens de commande 60 de cette valve d'échange 24 comportent la valve de commande 46 et des moyens 140 pour commander le déplacement du tiroir, lorsque celui-ci est rendu possible par l'état de la valve de commande 46.

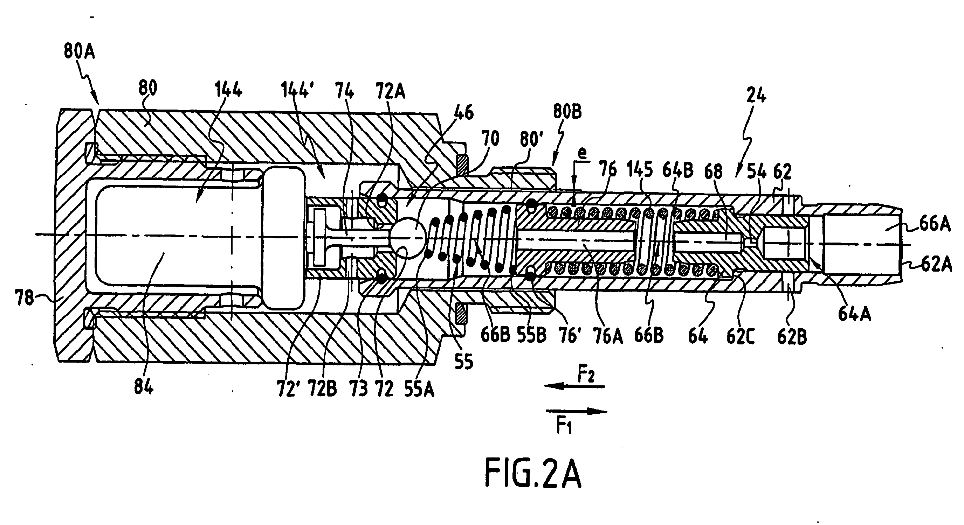

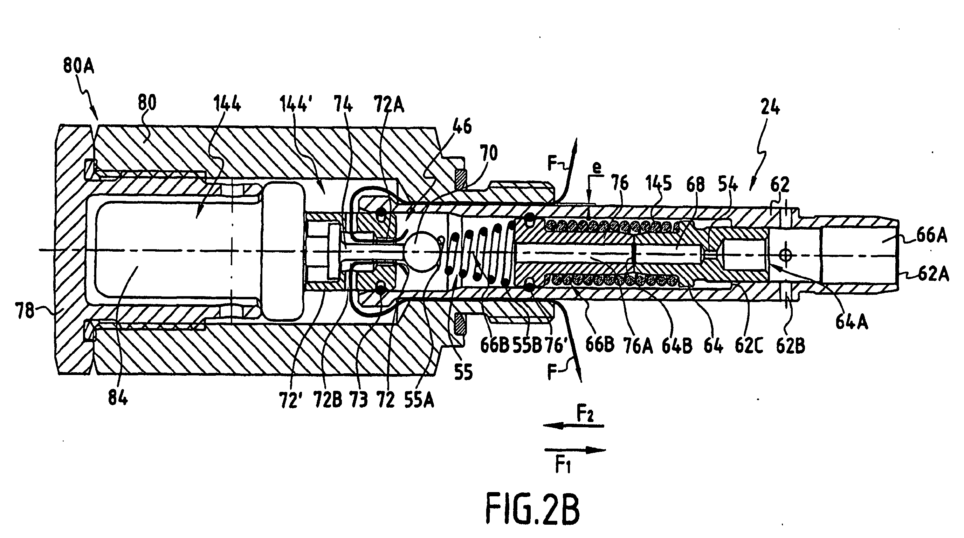

Les moyens de commande 140 du tiroir illustrés sur la figure 2 sont des moyens de commande hydraulique et comportent une conduite de liaison 142 qui est reliée à la conduite 22 et qui débouche sur un côté du tiroir dans une chambre de commande d'ouverture (non représentée sur la figure 1), de sorte que la pression de fluide dans la conduite de liaison 142 tend à pousser ce tiroir vers sa position d'ouverture. Les moyens de commande 140 comportent en outre des moyens de rappel vers la position de fermeture, qui comprennent en l'espèce un ressort 145 et une conduite de liaison 52A, reliée à la conduite 22 par l'intermédiaire d'une restriction 54 et débouchant sur un côté du tiroir dans une chambre de commande de fermeture (non représentée sur la figure 1), de sorte que la pression de fluide dans la conduite 52A et le ressort 145 tendent à pousser cet organe mobile vers sa position de fermeture, à l'encontre de l'effort exercé par la pression de fluide dans la conduite de liaison 142.

Ainsi, la pression de fluide dans la conduite principale 12 ou 14 qui est à la plus basse pression (à laquelle est reliée l'entrée de la valve d'échange 24) est prise en compte dans la commande cette valve.

La restriction 54 est disposée sur le tronçon 52B de liaison de la conduite de liaison 52A à la conduite 22, de manière à établir une perte de charge entre la conduite 22 et la chambre de commande de fermeture qui est alimentée par la conduite de liaison 52A.

Dans l'exemple représenté, les chambres de commande d'ouverture et de fermeture de la valve d'échange sont reliées à la même conduite principale, puisqu'elles sont toutes deux reliées à la conduite 22. On peut envisager que la chambre de commande d'ouverture reste reliée à la conduite principale à laquelle est reliée l'entrée de la valve d'échange, mais que la chambre de commande de fermeture soit reliée à une autre enceinte sous pression, par exemple à une source de pression auxiliaire telle que la pompe de gavage.

La valve de commande 46 est quant à elle commandée par des moyens de commande 50 entre une configuration ouverte dans laquelle elle autorise le fluide provenant de la conduite de liaison 52A et donc de la chambre de commande de fermeture de la valve d'échange 24 à s'écouler vers le réservoir sans pression 26 et une configuration fermée dans laquelle elle isole cette chambre de ce réservoir 26.

Ces moyens de commande 50 comportent une commande 144 de tout type convenable (hydraulique, électrique, pneumatique, thermique, mécanique, etc...) qui est actionnée en fonction d'un premier paramètre P représentant un état du circuit pour solliciter le passage de la valve de commande 46 entre sa position fermée et sa position ouverte.

Ce premier paramètre P représente un état du circuit et sa valeur indique si l'échange peut avoir lieu ou au contraire s'il est préférable d'éviter de prélever du fluide pour faire l'échange, ceci afin de préserver la quantité de fluide et sa pression dans le circuit et ainsi garantir son bon fonctionnement. Ce premier paramètre P est par exemple choisi pour représenter une situation de démarrage à froid du moteur ou bien des phases de fonctionnement particulières, telles qu'une accélération, une décélération, une manoeuvre requérant toute la puissance du moteur, etc. En conséquence, le premier paramètre de commande peut être choisi parmi la pression du fluide dans une conduite auxiliaire du circuit, la température du fluide dans une région du circuit, la vitesse du rotor du moteur, l'accélération ou la décélération dudit rotor et la cylindrée active du moteur, etc.

La valve de commande 46 peut par exemple être une électrovalve commandée par une unité de contrôle électronique qui donne un ordre d'ouverture ou de fermeture en fonction de la valeur du premier paramètre de commande P détectée, transmise à cette unité et comparée à une valeur de référence.

La valve 46 comporte avantageusement un organe mobile, tel qu'un tiroir qui est apte à se déplacer entre deux positions, correspondant respectivement aux configurations ouverte et fermée de cette valve 46, le déplacement de cet organe mobile étant commandé en fonction du premier paramètre de commande P.

En l'espèce, la commande 144 représentée sur la figure 1 pour la valve de commande 46 est un actionneur capable de déplacer l'organe mobile de la valve de commande 46, en fonction de la température.

La valve de commande 46 est amenée dans sa position d'ouverture par l'actionneur 144, tandis qu'elle est amenée dans sa position de fermeture par des moyens de rappel élastique de commande, en l'espèce un ressort 55, aux efforts duquel s'ajoutent ceux qui résultent de la pression de fluide provenant de la conduite de liaison 48 qui est reliée à la conduite de liaison 52A.

Nous allons à présent décrire le fonctionnement de la valve d'échange 24, qui comme on l'aura bien compris dépend d'une part, de la pression dans la conduite principale 12 ou 14 à laquelle elle est reliée et, d'autre part, du premier paramètre de commande P qui est apte à actionner la valve de commande 46.

Lorsque la valve de commande 46 est en position de fermeture, elle n'autorise pas le fluide provenant des conduites 52A et 52B, et de la chambre de commande de fermeture, à s'écouler vers le réservoir sans pression 26, de sorte que la pression dans la conduite de liaison 52A (a fortiori dans la chambre de commande de fermeture), est égale à la pression dans la conduite 22 et dans la conduite 142, ceci quel que soit le niveau de pression dans la conduite 22. Il s'ensuit que les efforts de rappel dus au ressort 145, combinés à la pression de fluide dans la conduite de liaison 52A sont alors plus importants que ceux exercés par la pression du fluide contenu dans la conduite de liaison 142, de sorte que la valve d'échange 24 se positionne dans sa configuration de fermeture interdisant ainsi l'évacuation d'un débit d'échange vers le réservoir sans pression 26, comme illustré sur la figure 1.

Au contraire, lorsque la valve de commande 46 est en position d'ouverture, elle autorise le fluide provenant de la conduite de liaison 52A et de la chambre de commande de fermeture à s'échapper vers le réservoir sans pression 26, de sorte que la pression de fluide dans la conduite de liaison 52A (a fortiori dans la chambre de commande de fermeture) est plus faible du fait de la présence de la restriction 54 que celle du fluide contenu dans la conduite de liaison 142 (a fortiori dans la chambre de commande d'ouverture). Il s'ensuit que, lorsque la pression du fluide dans la conduite de liaison 142 est supérieure à une valeur seuil qui génère un effort supérieur à l'effort du ressort 145, la valve d'échange 24 se positionne dans sa configuration d'ouverture autorisant ainsi un débit d'échange vers le réservoir sans pression 26 en réalisant une liaison entre la conduite 22 et la conduite de sortie 32. Par contre, quand la pression du fluide dans la conduite de liaison 142 est inférieure à cette valeur seuil, elle génère un effort inférieur à celui du ressort 145 et la valve d'échange se positionne dans sa configuration de fermeture interdisant un débit d'échange.

Les figures 2A et 2B représentent en détails, selon un exemple, une valve d'échange 24 et une valve de commande 46 du type précité.

La valve d'échange 24, représentée en position fermée sur la figure 2A, comporte un corps de valve 62 ayant une entrée 62A apte à être raccordée à l'une des conduites principales 12 ou 14 ou à la conduite 22 de la figure 1, et une sortie 62B apte à être reliée au réservoir sans pression 26. L'organe mobile de cette valve d'échange 24, en l'espèce un tiroir de soupape 64 est mobile dans ce corps de valve 62 entre une première position d'ouverture dans laquelle il isole l'entrée 62A de la valve d'échange 24 de la sortie 62B de cette dernière et une deuxième position (représentée sur la figure 2B) dans laquelle il relie ladite entrée 62A et ladite sortie 62B. Ces entrée et sortie 62A et 62B du corps 62 forment les entrée et sortie 24A et 24B évoquées en relation avec la figure 1.

Le ressort 145 tend à pousser ce tiroir 64 contre un épaulement 62C formé dans le corps de valve 62 dans le sens de la flèche F1 vers sa position de fermeture dans laquelle Il obstrue la sortie 62B.

La chambre de commande d'ouverture 66A de la valve d'échange 24 est située à l'extrémité 64A du tiroir 64 qui est voisine de l'entrée 62A du corps de valve 62, tandis que la chambre de commande de fermeture 66B est située à l'autre extrémité 64B de ce tiroir 64.

Les deux chambres de commande 66A et 66B communiquent entre elles par un perçage du tiroir 64, en l'espèce une conduite de liaison 68. Cette conduite de liaison 68 comporte la restriction 54 permettant de limiter le débit de fluide entrant dans la chambre de commande de fermeture 66B et de créer ainsi une perte de charge entre les chambres d'ouverture 66A et de fermeture 66B. La conduite 68 forme ainsi les conduites 142, 52A et 52B évoquées en relation avec la figure 1.

La valve de commande 46 comporte un dapet de commande ayant une bille et un siège, qui permet de relier la chambre de commande de fermeture 66B de la valve d'échange 24 au réservoir sans pression ou d'isoler cette chambre 66B du réservoir. Ce dapet comporte une bille 70 qui est disposée dans le corps de valve 62 de manière à pouvoir coopérer contre un siège 72 formant une butée solidaire du corps de valve 62. En l'espèce le siège 72 est formé à l'extrémité d'un manchon 72' maintenu fixe dans le corps de valve 62 par un jonc d'arrêt 73. Une tige 74 coopérant avec cette bille 70, est apte en fonction d'un seuil du paramètre P, à solliciter la bille 70 dans le sens indiqué par la flèche F1 pour écarter la bille 70 de son siège 72, tandis que des moyens de rappel élastique de commande, en l'espèce le ressort 55, sollicitent en permanence la bille 70 dans le sens opposé, indiqué par la flèche F2, vers sa position de fermeture. Le ressort 55 est avantageusement un ressort conique dont le sommet 55A supporte la bille 70.

Ainsi la bille 70 est en appui contre le sommet 55A du ressort 55, tandis que l'autre extrémité 55B du ressort 55, formant sa base, est en appui contre un élément 76 maintenu fixe dans le corps de valve 62 par un jonc d'arrêt 76'. Cet élément 76 est pourvu d'un perçage 76A permettant au fluide provenant de la conduite de liaison 68 de circuler jusqu'à l'enceinte qui contient la bille 70. Il s'ensuit que la chambre de commande de fermeture 66B s'étend de part et d'autre de ce perçage 76A.

Sur la figure 2A, la tige 74 coopère avec un organe 84 sensible à la température, en l'espèce la tige 74 et ledit organe 84 forment l'actionneur 144, la tige 74 pouvant être déplacée dans le sens des flèches F1 ou F2 en fonction de la valeur du premier paramètre de commande P, qui est dans ce cas une température prise dans une chambre 144', pour solliciter le passage de la valve de commande 46 entre sa position fermée et sa position ouverte. Ainsi, dans ce cas, l'actionneur est un élément thermosensible 144, tel qu'un vérin thermique. Il peut également s'agir d'un vérin électrique ou électro-mécanique commandé par une unité électronique de commande. Il convient de noter que la chambre 144' est naturellement remplie par le fluide présent dans le carter du moteur. L'actionneur peut réagir à un paramètre autre que la température et en particulier autre que la température d'un fluide, par exemple la pression de fluide dans une autre partie du drcuit que la conduite principale qui est à la plus basse pression, la température du carter du moteur, la cylindrée active du moteur, etc.).

L'actionneur 144 est solidaire du corps de valve 62. En l'espèce, il est maintenu contre le corps de valve 62 par l'intermédiaire du manchon 72' et d'un bouchon 78 fixé de manière étanche dans un fourreau 80 disposé dans le carter du moteur hydraulique (non représenté). On comprend qu'à une des extrémités 80A, le fourreau 80 est fermé par le bouchon 78, tandis qu'à son autre extrémité 80B, il présente un alésage 80' dans lequel le corps de valve 62 est disposé avec un jeu e autorisant le passage du fluide entre l'enceinte du carter du moteur et la chambre 144'.

Le manchon 72' présente un perçage 72A dans lequel la tige 74 est mobile et un passage 72B qui fait communiquer ce passage 72A avec la chambre 144'. Le siège 72 de la bille 70 est situé à l'extrémité du perçage 72A côté chambre de commande de fermeture 66B, de sorte que la position de la bille 70 interdit ou autorise la liaison entre le passage 72B et ladite chambre 66B. Le passage 72B est quant à lui en relation au réservoir sans pression 26 (représenté sur la figure 1) par l'intermédiaire de la chambre 144' et du jeu e existant entre le fourreau 80 et le corps de valve 62, permettant au fluide contenu dans la chambre de commande de fermeture 66B de s'échapper vers ce réservoir, lorsque la bille 70 est écartée du siège 72 par la tige 74.

Ainsi, lorsque la bille 70 est bloquée par le ressort 55 contre le siège 72, le fluide contenu dans la chambre de commande de fermeture 66B ne peut s'échapper vers ce réservoir et les efforts dus au ressort 145 combinés à la pression dans cette chambre 66B sont supérieurs à ceux dus à la pression dans la chambre de commande d'ouverture 66A, ce qui conduit à pousser le tiroir 64 vers sa position de fermeture dans le sens de la flèche F1. En conséquence, aucune liaison entre l'entrée 62A et la sortie 62B du corps de valve n'est possible, de sorte que l'échange ne peut se faire vers le réservoir sans pression.

Lorsque la température du fluide contenu dans la chambre 144' atteint un seuil donné, la tige 74 se déplace sous l'action du vérin thermosensible 144, à l'encontre du ressort 55 qui se comprime, dans le sens indiqué par la flèche F1 écartant la bille 70 de son siège 72, comme illustré sur la figure 2B. Dans ce cas, le fluide contenu dans la chambre de commande de fermeture 66B s'échappe par le perçage 72A et le passage 72B vers le réservoir, comme indiqué par les flèches F.

Il s'ensuit que, lorsque la pression à l'entrée 62A de la valve d'échange 24 est supérieure à un seuil donné, les efforts dus à la pression du fluide contenu dans la chambre de commande d'ouverture 66A deviennent supérieurs à ceux dus au ressort 145 et à la pression dans la chambre de commande de fermeture 66B, de sorte que le tiroir 64 de la soupape que constitue la valve d'échange 24 est poussé, à l'encontre de l'effort de rappel du ressort 145 qui se comprime, vers la position d'ouverture de la valve d'échange dans le sens de la flèche F2, permettant de relier l'entrée 62A du corps 62 de la valve d'échange à la sortie 62B de ce corps et ainsi autoriser l'échange vers le réservoir sans pression. Par contre, lorsque la pression du fluide à l'entrée 62A est inférieure audit seuil, l'effort de rappel du ressort 145 est prépondérant, de sorte que le tiroir 64 est poussé vers la position de fermeture de la valve d'échange dans le sens de la flèche F1 interdisant un débit d'échange.

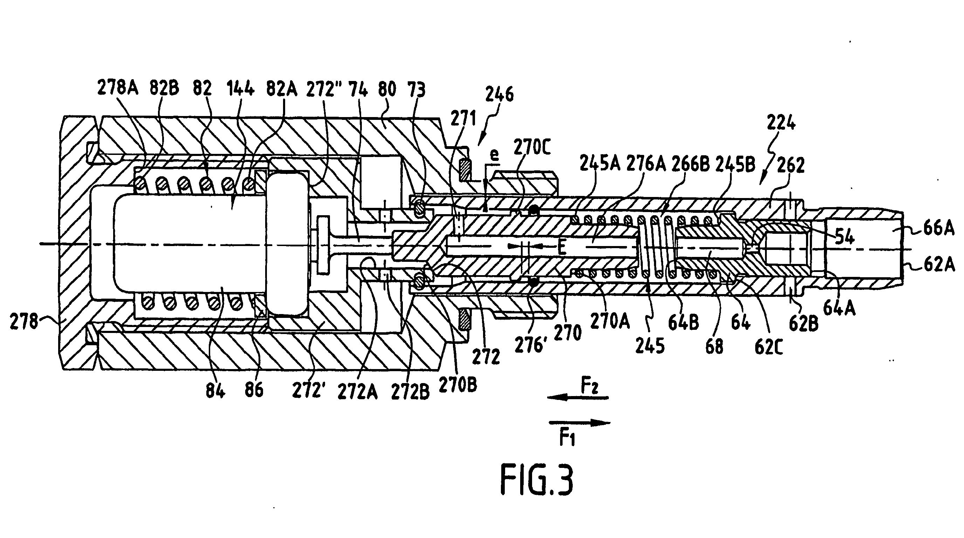

La figure 3 illustre une variante de la valve de commande de la figure 2A en position fermée. Le tiroir 64 et l'actionneur 144 sont identiques à ceux décrits précédemment et fonctionnent de la même manière, de sorte qu'ils ne font pas l'objet de la description qui va suivre. Tous les éléments communs à la figure 3 et aux figures 2A et 2B ont les mêmes références que sur ces figures.

La variante de la figure 3 se différencie de celle des figures 2A et 2B par le fait que le ressort de rappel d'échange permettant de solliciter le tiroir 64 de la valve d'échange 224 et le ressort de rappel de commande sont formés par un même ressort 245. L'ensemble bille 70, ressort conique 55 et élément fixe 76, est à présent remplacé par un unique élément mobile 270 qui est apte à se déplacer vers une position d'ouverture, dans le sens de la flèche F1, position dans laquelle il autorise le fluide contenu dans la chambre de commande de fermeture 266B à s'échapper vers le réservoir sans pression ou bien vers une position de fermeture, dans le sens de la flèche F2, position dans laquelle le fluide dans ladite chambre 266B est isolé du réservoir. La figure 3 illustre la position de fermeture de l'élément mobile 270.

Cet élément mobile 270 présente un épaulement 270A contre lequel le ressort 245 est en appui par une des ses extrémités 245A (son autre extrémité 245B étant en appui contre le tiroir 64) et une surface d'étanchéité 270B, opposée à l'épaulement 270A et apte à venir en appui contre le siège 272 formé à l'extrémité d'un manchon 272' fixé par un jonc d'arrêt 73 dans le corps de valve 262. L'action de ce ressort 245 et de la pression du fluide contenu dans la chambre de commande de fermeture 266B tend à solliciter le déplacement de l'élément mobile 270 dans le sens de la flèche F2 vers la position de fermeture de la valve de commande.

Comme sur les figures 2A et 2B, le manchon 272' présente un passage 2728 permettant, lorsque l'élément mobile 270 est écarté du siège 272 par la tige 74 de l'actionneur 144, de relier la chambre de commande de fermeture 266B au perçage 272A du manchon 272', et donc, grâce au jeu e, au réservoir.

Ainsi, dès que la température atteint un seuil donné, la tige 74 pousse l'élément mobile 270 vers sa position d'ouverture, dans le sens de la flèche F1, jusqu'à ce qu'un épaulement 270C formé sur cet élément 270, vienne en butée contre un jonc 276' fixé dans le corps de valve 262. Ce déplacement de l'élément mobile 270 entraîne une compression du ressort 245.

Une conduite de prélèvement 271 reliée à une conduite de liaison 276A, toutes deux formées dans l'élément mobile 270, permet de faire communiquer la chambre de commande de fermeture 266B avec le réservoir sans pression par l'intermédiaire du perçage 272A, du passage 272B et du jeu e qui existe entre le fourreau 80 et le corps de valve 262.

Dans la position de fermeture, l'épaulement 270C est écarté du jonc 276' d'une distance E choisie pour permettre la mobilité de l'élément mobile 270 de son siège 272 d'un écart suffisant pour autoriser l'échappement du fluide contenu dans la chambre de commande de fermeture 266B.

A partir de la position de fermeture représentée sur la figure 3, le fonctionnement est le suivant. Quel que soit le niveau de la pression du fluide dans la chambre de commande d'ouverture 66A, l'équilibre des pressions de fluide dans les chambres 66A et 266B fait que les efforts exercés par le ressort 245 sur le tiroir 64 contraignent ce dernier à rester immobile. Lorsque la tige 74 pousse l'élément mobile 270 dans le sens F1, le ressort 245 se comprime légèrement, la pression dans la chambre 266B diminue, le fluide s'écoulant comme indiqué précédemment. Il en résulte que si la pression dans la chambre 66A est supérieure à un seuil donné, alors les efforts générés par cette pression sont supérieurs à ceux du ressort 245 et poussent le tiroir 64 dans le sens de la flèche F2, en comprimant davantage le ressort 245, jusqu'à faire communiquer l'entrée 62A et la sortie 62B de la valve d'échange 62. Par contre, si la pression du fluide dans la chambre 66A est inférieure audit seuil, les efforts du ressort 245 sur le tiroir 64 deviennent prépondérants et poussent le tiroir vers la position de fermeture, interdisant tout débit d'échange.

Afin d'éviter tout risque d'endommagement en position ouverte de la valve de commande 246 et pour éviter de devoir dimensionner très précisément les pièces environnantes, le corps 84 de l'actionneur 144 peut être mobile. Ainsi, il peut être prévu un ressort de compensation 82 en butée contre un capuchon 278 et contre le corps 84 de l'actionneur 144, repoussant en permanence ce dernier contre un épaulement 272" du manchon 272' et autorisant le déplacement relatif du corps 84 de l'actionneur 144 par rapport à la tige 74. Plus précisément, ce ressort de compensation 82 vient en appui à une des ses extrémités 82A contre une rondelle 86, elle-même en appui contre le corps 84 de l'actionneur 144, tandis que son autre extrémité 82B vient en appui contre un épaulement 278A formé dans le capuchon 278.

Ainsi, en position d'ouverture de la valve de commande 246 (non représenté sur la figure 3), si la tige 74 a poussé l'élément mobile 270 dans le sens de la flèche F1, jusqu'à ce que son épaulement 270C vienne en butée contre le jonc 276' et que certaines conditions (hausse de la température, dilatation des pièces, etc.) tendent à déplacer davantage la tige 74 hors du corps 84, ce dernier encaisse les efforts et se déplace à l'encontre du ressort de compensation 82 dans le sens de la flèche F2. Bien entendu, le ressort de compensation 82 se comprime moins facilement que le ressort 245.

Comme indiqué précédemment pour les figures 2A, 2B et 3, le fourreau 80 contenant l'actionneur 144, la valve de commande et la valve d'échange est fixé, par exemple par vissage, dans un perçage du carter du moteur hydraulique. De même, le sélecteur 20 peur être intégré au moteur hydraulique, sa sortie 22 étant directement reliée à l'entrée 62A de la valve d'échange. En variante, les mêmes dispositions peuvent être appliquées au carter de la pompe principale d'alimentation du moteur hydraulique.

## Revendications

1. Circuit comprenant un dispositif d'échange et/ou de balayage et au moins un moteur hydraulique (16) ayant un carter qui définit un espace intérieur dans lequel est disposé le bloc-cylindres du moteur, et deux conduites principales (12, 14), qui sont reliées à une pompe principale (10) et qui constituent respectivement une conduite principale d'alimentation et une conduite principale d'échappement pour ledit moteur hydraulique (16), le dispositif d'échange et/ou de balayage comprenant une valve d'échange (24 ; 224) reliée à l'une au moins des conduites principales (12, 14) et apte à adopter une configuration ouverte dans laquelle elle établit une liaison entre ladite conduite principale (12, 14) à laquelle elle est reliée et un réservoir sans pression (26), et une configuration fermée dans laquelle elle empêche cette liaison, le dispositif comprenant des moyens (46, 60, 140, 246) pour commander le passage de ladite valve d'échange (24 ; 224) entre les configurations ouverte et fermée en fonction d'au moins un paramètre de commande (P) représentant un état du circuit, autre que la pression dans ladite conduite principale (12, 14) à laquelle ladite valve d'échange (24 ; 224) est reliée,
**caractérisé en ce que** la valve d'échange comporte un organe mobile (64) entre une première et une deuxième position correspondant respectivement à la configuration fermée et à la configuration ouverte de la valve d'échange, **en ce que** le dispositif comprend une valve de commande (46, 246) qui est commandée en fonction dudit au moins un paramètre de commande pour autoriser le déplacement dudit organe mobile (64), **en ce qu'**il comporte une chambre de commande d'ouverture (66A) apte à être reliée à l'une des conduites principales (12, 14) par une première conduite de liaison (142) pour solliciter l'organe mobile (64) vers sa deuxième position dans laquelle ladite conduite principale est reliée au réservoir sans pression et une chambre de commande de fermeture (66B, 266B) apte à être reliée à une enceinte sous pression pour solliciter l'organe mobile (64) vers sa première position et **en ce que** la valve de commande (46, 246) est commandée en fonction dudit au moins un paramètre de commande pour relier ladite chambre de commande de fermeture (66B, 266B) au réservoir sans pression ou pour isoler cette chambre de ce réservoir.

2. Circuit selon la revendication 1, **caractérisé en ce que** ledit paramètre de commande (P) représentant un état du circuit est choisi parmi la pression du fluide dans une conduite auxiliaire du circuit, la température du fluide dans une région du circuit, la vitesse du rotor du moteur, l'accélération ou la décélération dudit rotor, la cylindrée active du moteur, l'angle de braquage d'un véhicule entraîné par le moteur hydraulique, l'utilisation du débit d'une pompe auxiliaire par la commande d'une servitude, le sens de marche du moteur, et une situation de freinage.

3. Circuit selon la revendication 1 ou 2, **caractérisé en ce qu'**il comporte un actionneur (144) apte à commander la valve de commande (46 ; 246) en fonction d'un seuil dudit au moins un paramètre de commande (P).

4. Circuit selon la revendication 3, **caractérisé en ce que** l'actionneur (144) est apte à commander la valve de commande (46, 246), en fonction de la température dans une région (144') du circuit.

5. Circuit selon la revendication 4, **caractérisé en ce qu'**il comporte un organe sensible à la température coopérant avec ledit actionneur (144) et **en ce qu'**il est situé au voisinage du carter.

6. Circuit selon l'une quelconque des revendications 1 à 5, **caractérisé en ce qu'**il comporte un sélecteur d'échange (20) apte à mettre la conduite principale (12, 14) qui est à la plus basse pression en communication avec la valve d'échange (24 ; 224).

7. Circuit selon la revendication 6, **caractérisé en ce que** les chambres de commande d'ouverture et de fermeture (66A, 66B ; 266B) sont reliées à des conduites de liaison (142, 52A, 52B ; 68, 76A ; 276A), aptes à être reliées par l'intermédiaire dudit sélecteur d'échange (20) à la conduite principale (12, 14) qui est à la plus basse pression.

8. Circuit selon l'une quelconque des revendications 1 à 7, **caractérisé en ce que** la chambre de commande de fermeture (66B ; 266B) est associée à des moyens de rappel élastique d'échange (145 ; 245) sollicitant en permanence ledit organe mobile (64) vers sa première position.

9. Circuit selon l'une quelconque des revendications 1 à 8, **caractérisé en ce que** la conduite de liaison (52B ; 68) de la chambre de commande de fermeture (66B ; 266B) comporte une restriction (54).

10. Circuit selon la revendication 9, **caractérisé en ce que** la chambre de commande de fermeture (66B ; 266B) est reliée à la chambre de commande d'ouverture (66A) par ladite restriction (54).

11. Circuit selon la revendication 10, **caractérisé en ce que** la valve d'échange (24 ; 224) comprend un corps de valve (62 ; 262) ayant une entrée (62A) apte à être raccordée à l'une des conduites principales (12, 14) et une sortie (62B) apte à être reliée au réservoir sans pression (26), **en ce que** l'organe mobile (64) est disposé dans ce corps de valve et isole ladite entrée (62A) et ladite sortie (62B) dans sa première position, tandis qu'il relie ladite entrée (62A) et ladite sortie (62B) dans sa deuxième position, et **en ce que** la chambre de commande d'ouverture (66A) est située à une extrémité (64A) de l'organe mobile (64) qui est voisine de l'entrée (62A) du corps de valve (62), tandis que la chambre de commande de fermeture (66B ; 266B) est située à l'autre extrémité (64B) de cet organe mobile (64) et communique avec la chambre de commande d'ouverture (66A) par un perçage (68) de l'organe mobile (64) sur lequel est disposée la restriction (54).

12. Circuit selon la revendication 11, **caractérisé en ce que** la valve de commande (46 ; 246) comporte un clapet de commande (70 ; 270) disposé au moins en partie dans le corps de valve (62 ; 262).

13. Circuit selon l'une quelconque des revendications 1 à 12, **caractérisé en ce que** la valve de commande (46 ; 246) comporte un clapet de commande (70 ; 270) apte à adopter une position d'ouverture dans laquelle il relie la chambre de commande de fermeture (66B ; 266B) au réservoir sans pression (26) et une position de fermeture dans laquelle il isole ladite chambre (66B ; 266B) du réservoir (26).

14. Circuit selon la revendication 13, **caractérisé en ce qu'**il comporte des moyens de rappel élastique de commande (55 ; 245) qui sollicitent en permanence ledit clapet de commande (70 ; 270) vers sa position de fermeture.

15. Circuit selon la revendication 3 et la revendication 13 ou 14, **caractérisé en ce que** ledit actionneur (144) est apte à coopérer avec le clapet de commande (70 ; 270) pour solliciter ce dernier (70 ; 270) vers sa position d'ouverture.

16. Circuit selon la revendication 11 et l'une quelconque des revendications 3 à 5 et 11 à 15, **caractérisé en ce que** l'actionneur (144) et/ou l'organe sensible à la température sont solidaires du corps de valve (62 ; 262).

17. Circuit selon la revendication 16, **caractérisé en ce que** l'actionneur (144) et/ou l'organe sensible à la température est apte à se déplacer dans le corps de valve (62 ; 262) et est sollicité en permanence par un moyen de rappel élastique vers une butée (72 ; 272) solidaire du corps de valve (62 ; 262).

18. Circuit selon l'une quelconque des revendications 1 à 17, **caractérisé en ce que** la valve de commande (46 ; 246) est une valve progressive.

19. Circuit selon la revendication 11 et l'une quelconque des revendications 1 à 18, **caractérisé en ce que** ledit corps de valve (62 ; 262) est disposé dans un alésage du carter.

20. Circuit selon l'une quelconque des revendications 1 à 19, **caractérisé en ce que** la valve d'échange (24 ; 224) a une sortie (62B) qui est raccordée au réservoir sans pression (26) par l'intermédiaire de l'espace intérieur du carter.

## Claims

1. A circuit comprising a replenishing and/or flushing device and at least one hydraulic motor (16) having a casing which defines an internal space in which the cylinder block of the motor is disposed, and two main ducts (12, 14) which are connected to a main pump (10) and which constitute respectively a feed main duct and a discharge main duct for said hydraulic motor (16), the replenishing and/or flushing device comprising a replenishing valve (24; 224) connected to at least one of the main ducts (12, 14) and suitable for taking up an open configuration in which it establishes a link between said main duct (12, 14) to which it is connected and a pressure-free reservoir (26), and a closed configuration in which it prevents such a link from being established, the device comprising means (46, 60, 140, 246) for causing said replenishing valve (24; 224) to go between the open and the closed configurations as a function of at least one control parameter (P) representing a state of the circuit other than pressure in said main duct (12, 14) to which said replenishing valve (24; 224) is connected;
said circuit being **characterised in that** the replenishing valve includes a moving member (64) mounted to move between a first position and a second position respectively corresponding to the closed configuration and to the open configuration of the replenishing valve, **in that** the device comprises a control valve (46, 246) which is controlled as a function of said at least one control parameter to allow said moving member (64) to move, **in that** said device comprises an opening control chamber (66A) suitable for being connected to one of said main ducts (12, 14) via a first link duct (142) so as to urge the moving member (64) towards its second position in which said main duct is connected to the pressure-free reservoir, and a closing control chamber (66B, 266B) suitable for being connected to a pressurized enclosure in order to urge the moving member (64) towards its first position, and **in that** the control valve (46, 246) is controlled as a function of said at least one control parameter in order to connect said closing control chamber (66B, 266B) to the pressure-free reservoir or in order to isolate said chamber from said reservoir.

2. A circuit according to claim 1, **characterised in that** said control parameter (P) representing a state of the circuit is chosen from the pressure of the fluid in an auxiliary duct of the circuit, from the temperature of the fluid in a region of the circuit, from the speed of the rotor of the motor, from acceleration or deceleration of said rotor, from the active cubic capacity of the motor, from the turning angle of a vehicle driven by the hydraulic motor, from use of the flow rate delivered by an auxiliary pump for controlling auxiliary equipment, from the direction of drive of the motor, and from a braking situation.

3. A circuit according to claim 1 or claim 2, **characterised in that** it is provided with an actuator (144) suitable for controlling the control valve (46; 246) as a function of a threshold of said at least one control parameter (P).

4. A circuit according to claim 3, **characterised in that** the actuator (144) is suitable for controlling the control valve (46, 246) as a function of the temperature in a region (144') of the circuit.

5. A circuit according to claim 4, **characterised in that** it comprises a temperature-responsive member co-operating with said actuator (144), and **in that** said member is situated in the vicinity of the casing.

6. A circuit according to any one of claims 1 to 5, **characterised in that** it is provided with a replenishing selector (20) suitable for putting the main duct (12, 14) that is at the lower pressure into communication with the replenishing valve (24; 224).

7. A circuit according to claim 6, **characterised in that** the opening and closing control chambers (66A, 66B; 266B) are connected to link ducts (142, 52A, 52B; 68, 76A; 276A) suitable for being connected via said replenishing selector (20) to the main duct (12, 14) that is at the lower pressure.

8. A circuit according to any one of claims 1 to 7, **characterised in that** the closing control chamber (66B; 266B) is associated with replenishing resilient return means (145; 245) continuously urging said moving member (64) towards its first position.

9. A circuit according to any one of claims 1 to 8, **characterised in that** the link duct (52B; 68) of the closing control chamber (66B; 266B) is provided with a constriction (54).

10. A circuit according to claim 9, **characterised in that** the closing control chamber (66B; 266B) is connected to the opening control chamber (66A) via said constriction (54).

11. A circuit according to claim 10, **characterised in that** the replenishing valve (24; 224) has a valve body (62; 262) provided with an inlet (62A) suitable for being connected to one of the main ducts (12, 14) and with an outlet (62B) suitable for being connected to the pressure-free reservoir (26), **in that** the moving member (64) is disposed in said valve body and it isolates said inlet (62A) from said outlet (62B) in its first position, while it connects said inlet (62A) to said outlet (62B) in its second position, and **in that** the opening control chamber (66A) is situated at an end (64A) of the moving member (64) that is in the vicinity of the inlet (62A) of the valve body (62), while the closing control chamber (66B; 266B) is situated at the other end (64B) of said moving member (64) and communicates with the opening control chamber (66A) via a bore (68) in the moving member (64), in which bore the constriction (54) is disposed.

12. A circuit according to claim 11, **characterised in that** the control valve (46; 246) has a control valve member (70; 270) that is disposed at least in part inside the valve body (62; 262).

13. A circuit according to any one of claims 1 to 12, **characterised in that** the control valve (46; 246) has a control valve member (70; 270) suitable for taking up an open position in which it connects the closing control chamber (66B; 266B) to the pressure-free reservoir (26) and a closed position in which it isolates said chamber (66B; 266B) from the reservoir (26).

14. A circuit according to claim 13, **characterised in that** it comprises control resilient return means (55; 245) which continuously urge said control valve member (70; 270) towards its closed position.

15. A circuit according to claim 3 and to claim 13 or claim 14, **characterised in that** said actuator (144) is suitable for co-operating with the control valve member (70; 270) in order to urge said control valve member (70; 270) towards its open position.

16. A circuit according to claim 11, and to any one of claims 3 to 5 and 11 to 15, **characterised in that** the actuator (144) and/or the temperature-responsive member are secured to the valve body (62; 262).

17. A circuit according to claim 16, **characterised in that** the actuator (144) and/or the temperature-responsive member is/are suitable for moving in the valve body (62; 262), and is/are urged continuously by resilient return means towards an abutment (72; 272) that is secured to the valve body (62; 262).

18. A circuit according to any one of claims 1 to 17, **characterised in that** the control valve (46; 246) is a progressive valve.

19. A circuit according to claim 11 and to any one of claims 1 to 18, **characterised in that** said valve body (62; 262) is disposed in a bore in the casing.

20. A circuit according to any one of claims 1 to 19, **characterised in that** the replenishing valve (24; 224) has an outlet (62B) that is connected to the pressure-free reservoir (26) via the internal space inside the casing.

## Patentansprüche

1. Kreislauf mit einer Austausch- und/oder Spülvorrichtung und wenigstens einem Hydraulikmotor (16) mit einem Gehäuse, das einen Innenraum begrenzt, in dem der Zylinderblock des Motors angeordnet ist, und zwei Hauptleitungen (12, 14), die mit einer Hauptpumpe (10) verbunden sind und eine Hauptzulaufleitung bzw. eine Hauptablaufleitung für den Hydraulikmotor (16) bilden, wobei die Austausch- und/oder Spülvorrichtung ein Austauschventil (24; 224) aufweist, das mit wenigstens einer der Hauptleitungen (12, 14) verbunden ist und eine geöffnete Stellung, in der es eine Verbindung zwischen der Hauptleitung (12, 14), mit der es verbunden ist, und einem druckfreien Behälter (26) herstellt, und eine geschlossene Stellung einzunehmen vermag, in der es diese Verbindung unterbricht, wobei die Vorrichtung Mittel (46, 60, 140, 246) aufweist, um den Wechsel des Austauschventils (24; 224) zwischen der geöffneten und der geschlossenen Stellung in Abhängigkeit wenigstens eines Steuerparameters (P) zu betätigen, der einen Zustand des Kreislaufs darstellt, der nicht dem Druck in der Hauptleitung (12, 14) entspricht, mit der das Austauschventil (24; 224) verbunden ist,
**dadurch gekennzeichnet, dass** das Austauschventil ein Element (64) aufweist, das zwischen einer ersten Position und einer zweiten Position beweglich ist, die der geschlossenen bzw. der geöffneten Stellung des Austauschventils entspricht, dass die Vorrichtung ein Steuerventil (46, 246) aufweist, das in Abhängigkeit von dem wenigstens einen Steuerparameter betätigt wird, um das Verschieben des beweglichen Elements (64) zu gestatten, dass sie einen Öffnungssteuerraum (66A) umfasst, der in der Lage ist, durch eine erste Verbindungsleitung (142) mit einer der Hauptleitungen (12, 14) verbunden zu werden, um das bewegliche Element (64) in seine zweite Position zu drängen, in der die Hauptleitung mit dem Behälter verbunden ist, sowie einen Schließsteuerraum (66B, 266B), der in der Lage ist, mit einem unter Druck stehenden Raum verbunden zu werden, um das bewegliche Element (64) in seine erste Position zu drängen, und dass das Steuerventil (46, 246) in Abhängigkeit von dem wenigstens einen Steuerparameter betätigt wird, um den Schließsteuerraum (66B, 266B) mit dem druckfreien Behälter zu verbinden oder um diesen Raum von diesem Behälter abzusperren.

2. Kreislauf nach Anspruch 1,
**dadurch gekennzeichnet, dass** der einen Zustand des Kreislaufs darstellende Steuerparameter (P) aus dem Fluiddruck in einer Nebenleitung des Kreislaufs, der Fluidtemperatur in einem Bereich des Kreislaufs, der Rotorgeschwindigkeit des Motors, der Rotorbeschleunigung oder der Rotorverzögerung, dem aktiven Hubvolumen des Motors, dem Einschlagwinkel eines durch den Hydraulikmotor angetriebenen Fahrzeugs, der Nutzung der Fördermenge einer Hilfspumpe durch die Betätigung eines Hilfsgeräts, der Laufrichtung des Motors und einer Bremssituation ausgewählt ist.

3. Kreislauf nach Anspruch 1 oder 2,
**dadurch gekennzeichnet, dass** er einen Steller (144) aufweist, der in der Lage ist, das Steuerventil (46; 246) in Abhängigkeit von einem Grenzwert des wenigstens einen Steuerparameters (P) zu betätigen.

4. Kreislauf nach Anspruch 3,
**dadurch gekennzeichnet, dass** der Steller (144) in der Lage ist, das Steuerventil (46, 246) in Abhängigkeit von der Temperatur in einem Bereich (144') des Kreislaufs zu betätigen.

5. Kreislauf nach Anspruch 4,
**dadurch gekennzeichnet, dass** er ein temperaturempfindliches Organ aufweist, das mit dem Steller (144) zusammenwirkt, und dass er in der Nähe des Gehäuses angeordnet ist.

6. Kreislauf nach einem der Ansprüche 1 bis 5,
**dadurch gekennzeichnet, dass** er einen Austauschwähler (20) umfasst, der in der Lage ist, eine Verbindung zwischen der unter niedrigstem Druck stehenden Hauptleitung (12, 14) und dem Austauschventil (24; 224) herzustellen.

7. Kreislauf nach Anspruch 6,
**dadurch gekennzeichnet, dass** der Öffnungs- und der Schließsteuerraum (66A, 66B; 266B) mit Verbindungsleitungen (142, 52A, 52B; 68, 76A; 276A) verbunden sind, die in der Lage sind, über den Austauschwähler (20) mit der unter niedrigstem Druck stehenden Hauptleitung (12, 14) verbunden zu werden.

8. Kreislauf nach einem der Ansprüche 1 bis 7,
**dadurch gekennzeichnet, dass** der Schließsteuerraum (66B; 266B) elastischen Austauschrückstellmitteln (145; 245) zugeordnet ist, die das bewegliche Element (64) ständig in seine erste Position drängen.

9. Kreislauf nach einem der Ansprüche 1 bis 8,
**dadurch gekennzeichnet, dass** die Verbindungsleitung (52B; 68) des Schließsteuerraums (66B; 266B) eine Drosselung (54) aufweist.

10. Kreislauf nach Anspruch 9,
**dadurch gekennzeichnet, dass** der Schließsteuerraum (66B, 266B) durch die Drosselung (54) mit dem Öffnungssteuerraum (66A) verbunden ist.

11. Kreislauf nach Anspruch 10,
**dadurch gekennzeichnet, dass** das Austauschventil (24, 224) einen Ventilkörper (62; 262) mit einem Eingang (62A), der mit einer der Hauptleitungen (12, 14) verbunden zu werden vermag, und mit einem Ausgang (62B) umfasst, der in der Lage ist, mit dem drucklosen Behälter (26) verbunden zu werden vermag, dass das bewegliche Element (64) in diesem Ventilkörper angeordnet ist und in seiner ersten Position den Eingang (62A) und den Ausgang (62B) absperrt, während es in seiner zweiten Position den Eingang (62A) und den Ausgang (62B) miteinander verbindet, und dass der Öffnungssteuerraum (66A) an einem Ende (64A) des beweglichen Elements (64) angeordnet ist, das dem Eingang (62A) des Ventilkörpers (62) benachbart ist, während der Schließsteuerraum (66B; 266B) an dem anderen Ende (64B) des beweglichen Elements (64) angeordnet ist und mit dem Öffnungssteuerraum (66A) durch eine Bohrung (68) des beweglichen Elements (64), in der die Drosselung (54) angeordnet ist, in Verbindung steht.

12. Kreislauf nach Anspruch 11,
**dadurch gekennzeichnet, dass** das Steuerventil (46; 246) eine Steuerklappe (70; 270) aufweist, die wenigstens zum Teil in dem Ventilkörper (62; 262) angeordnet ist.

13. Kreislauf nach einem der Ansprüche 1 bis 12,
**dadurch gekennzeichnet, dass** das Steuerventil (46; 246) eine Steuerklappe (70; 270) aufweist, die eine Öffnungsstellung einzunehmen vermag, in der sie den Schließsteuerraum (66B; 266B) mit dem drucklosen Behälter (26) verbindet, sowie eine Schließstellung, in der sie den Raum (66B; 266B) vom Behälter (26) absperrt.

14. Kreislauf nach Anspruch 13,
**dadurch gekennzeichnet, dass** er elastische Betätigungsrückstellmittel (55; 245) umfasst, die die Steuerklappe (70; 270) ständig in ihre Schließstellung drängen.

15. Kreislauf nach Anspruch 3 und Anspruch 13 oder 14,
**dadurch gekennzeichnet, dass** das Stellelement (144) mit der Steuerklappe (70, 270) zusammenzuwirken vermag, um letztere (70; 270) in ihre Öffnungsstellung zu drängen.

16. Kreislauf nach Anspruch 11 und einem der Ansprüche 3 bis 5 und 11 bis 15,
**dadurch gekennzeichnet, dass** der Steiler (144) und/oder das temperaturempfindliche Organ mit dem Ventilkörper (62; 262) fest verbunden sind.

17. Kreislauf nach Anspruch 16,
**dadurch gekennzeichnet, dass** sich der Steller (144) und/oder das temperaturempfindliche Organ in dem Ventilkörper (62; 262) zu bewegen vermögen und durch ein elastisches Rückstellmittel ständig zu einem Anschlag (72; 272) gedrängt werden, der mit dem Ventilkörper (62; 262) fest verbunden ist.

18. Kreislauf nach einem der Ansprüche 1 bis 17,
**dadurch gekennzeichnet, dass** das Steuerventil (46; 246) ein Proportionalventil ist.

19. Kreislauf nach Anspruch 11 und nach einem der Ansprüche 1 bis 18,
**dadurch gekennzeichnet, dass** der Ventilkörper (62; 262) in einer Bohrung des Gehäuses angeordnet ist.

20. Kreislauf nach einem der Ansprüche 1 bis 19,
**dadurch gekennzeichnet, dass** das Austauschventil (24; 224) einen Ausgang (62B) hat, der mit dem drucklosen Behälter (26) durch den Innenraum des Gehäuses verbunden ist.
